# EUROPÄISCHE PATENTANMELDUNG

(11) **EP 3 456 447 A1**
(43) Veröffentlichungstag der Anmeldung: **20.03.2019**
(21) Anmeldenummer: 17191282.7
(22) Anmeldetag: 15.09.2017
(51) Int. Cl.: B23B 31/16, B23B 31/12, B23B 31/26, B23B 35/00

(54) **AUSSENSPANNMITTEL UND VERFAHREN ZUR FESTLEGUNG VON WERKSTÜCKEN**

(71) Anmelder: Hainbuch GmbH Spannende Technik, 71672 Marbach (DE)
(72) Erfinder: Hillinger, Alfred, 71711 Murr (DE); Martin, Stefan, 71711 Steinheim (DE)
(74) Vertreter: Patentanwaltskanzlei Cartagena

(57) **Zusammenfassung**

Vorgeschlagen wird ein Spannmittel (10) in Art eines Außenspannmittels zum Festlegen von Werkstücken zum Zwecke der spannenden Bearbeitung, insbesondere zum Festlegen von Nockenrohlingen (100) für gefügte Nockenwellen zum Zwecke der Einbringung oder Nachbearbeitung einer Nockenbohrung. Das Spannmittel (10) weist ein Gehäuse (20) und einen an einer Stirnseite (22) des Gehäuses (20) vorgesehenen Aufnahmebereich (24) zur Aufnahme eines Werkstücks (100) auf. Es weist weiterhin eine Mehrzahl von radial in Richtung des Aufnahmebereichs beweglichen Zentrierkörpern (40) zur Zentrierung des Werkstücks (100) sowie eine Mehrzahl von in Richtung des Aufnahmebereichs beweglichen Spannkörpern (60) zur Aufbringung eines Haltemoments auf das Werkstück (100) auf. Es wird unter anderem vorgeschlagen, dass das Spannmittel (10) ein gemeinsames in einer Axialrichtung (2) verlagerbares Steuerorgan (30) aufweist, welches mit den Zentrierkörpern (40) und den Spannkörpern (60) derart gekoppelt ist, dass bei einer Bewegung des Steuerorgans (30) in einer Spannrichtung (2A) die Zentrierkörpern (40) und die Spannkörper (60) zeitlich versetzt zueinander nach innen in Richtung des Aufnahmebereichs (24) verlagert werden.

## Beschreibung

### ANWENDUNGSGEBIET UND STAND DER TECHNIK

Die Erfindung betrifft ein Spannmittel in Art eines Außenspannmittels zum Festlegen von Werkstücken, insbesondere zum Zwecke der nachfolgenden spanenden Bearbeitung im gespannten Zustand. Insbesondere betrifft die Erfindung ein solches Spannmittel zum Festlegen von Nockenrohlingen für gefügte Nockenwellen zum Zwecke der Einbringung oder Nachbearbeitung einer Nockenbohrung sowie ein hierfür vorgesehenes Spannverfahren.

Das der Erfindung zugrunde liegende Problem betrifft das Einspannen eines Werkstücks, wenn dieses Werkstück durch eine von der Kreisform abweichende Außenformgebung nicht in einem Spannmittel mit einer Mehrzahl synchronisierter Spannbacken eingespannt werden kann. Insbesondere tritt dieses Problem bei Nocken für Nockenwellen auf, bei denen eine Einzelfertigung der Nocken und eine anschließende Anbringung an einem gemeinsamen Nockenrohr erfolgen. Die unrunde Außenform erschwert hier das Spannen. Verschiedene Ansätze, die bislang erprobt wurden, um eine noch nicht fertig bearbeitete Nocke zum Zwecke der spanenden Bearbeitung einzuspannen, haben nicht vollständig befriedigende Ergebnisse erbracht. Bei den bekannten Verfahren ist häufig ein vergleichsweise hoherAusschuss-Anteil zu verzeichnen.

### AUFGABE UND LÖSUNG

Aufgabe der Erfindung ist es, ein Spannmittel und ein Verfahren zum Spannen zur Verfügung zu stellen, die ein unaufwändiges Spannen von Werkstücken mit von der Kreisform abweichenden Spannoberflächen gestatten, insbesondere in Hinblick auf das Spannen von Nocken.

Die Aufgabe wird durch ein Spannmittel gemäß Anspruch 1 gelöst.

Ein erfindungsgemäßes Spannmittel ist in Art eines Außenspannmittels zum Festlegen von Werkstücken zum Zwecke der nachfolgenden spanenden Bearbeitung ausgebildet. Wie eingangs erläutert, dient es insbesondere zum Festlegen von noch nicht fertig bearbeiteten Nocken, im Weiteren Nockenrohlinge genannt, für gefügte Nockenwellen oder zum Festlegen anderer Werkstücke ähnlicher Außenform, die durch eine unrunde Spannoberfläche und/oder stark variierende Wandungsstärken schwer präzise zu spannen sind.

Das erfindungsgemäße Spannmittel weist in bekannter Weise ein Gehäuse und einen an einer Stirnseite des Gehäuses vorgesehenen Aufnahmebereich zur Aufnahme eines Werkstücks auf, wobei der Aufnahmebereich vorzugsweise zentriert an der Stirnseite vorgesehen ist und eine Anlagefläche zur Anlage des Nockenrohlings aufweist. Das Spannmittel kann zu stationären oder zur rotierenden Verwendung vorgesehen sein. Als rotierendes Spannmittel weist dieses und insbesondere sein Gehäuse vorzugsweise eine in etwa rotationssymmetrische Formgebung auf, um Unwuchten gering zu halten.

Das Spannmittel weist einerseits eine Mehrzahl von radial in Richtung des Aufnahmebereichs beweglichen Zentrierkörpern zur Zentrierung des Werkstücks auf. Andererseits verfügt das Spannmittel über eine Mehrzahl von in Richtung des Aufnahmebereichs beweglichen Spannkörpern zur anschließenden Aufbringung eines Haltemoments auf das Werkstück.

Es sind also mit den Zentrierkörpern und den Spannkörpern zwei unterschiedliche Sätze von gegenüber den Aufnahmebereich verfahrbaren Körpern vorgesehen, die gemeinsam für das Spannen des Werkstücks verantwortlich sind. Dabei weisen die Zentrierkörper und die Spannkörper jeweils Kontaktflächen zur Anlage am Werkstück auf, die vorzugsweise bezogen auf die Axialrichtung auf gleicher oder überlappender Position in Eingriff mit dem Werkstück gelangen, im Falle einer Nocke als Werkstück an einer umlaufenden Nockenkontaktfläche der Nocke, mit der diese an Gegenflächen derVentile anliegen.

Wenngleich grundsätzlich auch die vollständig getrennte Steuerung der Mehrzahl von Zentrierkörpern einerseits und der Mehrzahl von Spannkörpern andererseits möglich ist, wird es als bevorzugt angesehen, wenn das Spannmittel ein gemeinsames in einer Axialrichtung verlagerbares Steuerorgan aufweist, welches phasenweise sowohl mit den Zentrierkörpern als auch den Spannkörpern gekoppelt ist, wobei bei einer Bewegung des Steuerorgans in einer Spannrichtung die Zentrierkörper und die Spannkörper zeitlich versetzt zueinander nach innen in Richtung des Aufnahmebereichs verlagert werden.

Ein erfindungsgemäßes Spannmittel ist in der Lage, ein sehr präzises Spannen durch die beiden getrennten Typen von Backenkörpern zu erzielen. Die radial verfahrbaren Zentrierkörper gelangen beim Spannen zuerst in Kontakt mit dem Werkstück und bringen dieses nach einer vorherigen manuellen oder maschinellen Vorplatzierung in seine genaue Solllage für die Bearbeitung. Für die Zentrierung werden nur geringe Zentrierkräfte benötigt, so dass auch nach erfolgter Zentrierung und mit unverändert am Werkstück anliegenden Zentrierkörpern keine ungewollte Verformung des Werkstücks zu befürchten ist. Die anschließend an das Werkstück angelegten Spannkörper legen sich an das bereits zentrierte Werkstück an, ohne dessen Position zu ändern.

Die Konfiguration der Zentrierkörper ist primär auf den Zweck der Zentrierung angepasst, nicht auf das Aufbringen der erforderlichen Spannkräfte zur Aufnahme von Kräften und insbesondere Momenten während der Bearbeitung. Es wird insbesondere vorgeschlagen, dass drei ZentrierkörperVerwendung finden, die in Richtung eines gemeinsamen Mittelpunktes im Bereich des Aufnahmebereichs verlagerbar sind, dass die Zentrierkörper einheitlich voneinander beabstandet sind und/oder dass die Bewegung der Zentrierkörper synchronisiert ist, so dass sie stets nur gemeinsam verlagerbar sind. Zum Zentrieren von Körpern mit unrundem Außenumfang, insbesondere von Nocken, kann es weiterhin von Vorteil sein, wenn die Zentrierkörper mit Kontaktflächen zur Anlage am Werkstück versehen sein, die voneinander abweichende Formgebung aufweisen. Dies ergibt sich im Falle einer Gestaltung mit drei Zentrierkörpern im Abstand von 120° insbesondere dann, wenn das Werkstück keine drei ebenfalls um 120° versetzte Flächenbereiche gleicher Formgebung aufweist.

Die Konfiguration der Spannkörper ist primär auf den Zweck der Aufnahme von Kräften und insbesondere Momenten während der Bearbeitung angepasst. Hierzu können drei oder auch vier oder mehr Spannkörper vorgesehen sein, die in Richtung des Aufnahmebereichs verlagerbar sind. Eine exakt radiale Ausrichtung der Bewegung kann vorgesehen sein. Je nach Form des Werkstücks sind jedoch auch andere und unregelmäßige Anordnungen und Ausrichtungen möglich und teilweise bevorzugt. Insbesondere um Momente aufnehmen zu können, sind einige der Spannkörper vorzugsweise derart verlagerbar und/oder weisen eine derart ausgerichtete Kontaktfläche auf, dass sie exzentrisch zum Mittelpunkt des Aufnahmebereichs beweglich oder ausgerichtet sind, um die Funktion als Momentenstütze während der Bearbeitung erfüllen zu können. Auch Ausrichtungen, bei denen die Bewegungsrichtung mindestens eines der Spannkörper zu den Bewegungsrichtungen beider benachbarter Spannkörper unterschiedliche Winkel einschließt können je nach Form des Werkstücks von Vorteil sein.

Die Spannkörperweisen üblicherweise eine Kontaktfläche auf, die zumindest bei der überwiegenden Zahl von Spannkörpern bestimmungsgemäß nur in der zur Axialrichtung orthogonalen Ebene eine Kraftwirkung auf das Werkstück entfaltet. Es kann jedoch vorgesehen sein, dass einige der Spannkörper, vorzugsweise ein oder zwei zusätzliche Spannkörper, mit einer schrägen Kontaktfläche ausgebildet sind, die das Werkstück im Bereich einer Kante untergreifen kann, um bei Bearbeitung der Stirnfläche eine Stützwirkung gegen eine Biegeverformung des Werkstücks zu entfalten. Der Spannkörper ist also derart ausgestaltet, dass er eine axiale Stützfunktion für das Werkstück übernimmt.

Wenngleich die Zentrierkörper und die Spannkörper unterschiedliche Ziele verfolgen, bestehen dennoch Überlappungen. So können auch die Zentrierkörper in nachrangigem Maße Kräfte aufnehmen, die während der Bearbeitung in das Werkstück eingebracht werden.

Wie bereits erläutert, werden die Zentrierkörper und die Spannkörper vorzugsweise mittels eines gemeinsamen Steuerorgans, vorzugsweise in Form einer zentrisch angeordneten Steuerstange, zum Zwecke des Spannens und Entspannens verlagert.

Hierzu weist das Spannmittel eine oder vorzugsweise zwei lösbare Kupplungen zur zumindest phasenweisen Kopplung des Steuerorgans mit den Zentrierkörpern einerseits und der Spannkörper andererseits auf. Die erste lösbare Kupplung umfasst dabei vorzugsweise eine erste Kupplungsfläche am Steuerorgan und eine hiermit in Eingriff bringbare erste Gegenfläche an einem ersten zentralen Betätigungsorgan, welches den Zentrierkörpern zugeordnet ist, so dass durch eine axiale Verlagerung des ersten zentralen Betätigungsorgans alle Zentrierkörper radial verlagert werden, vorzugsweise synchronisiert zwangsverlagert werden.

Analog zu den Zentrierkörpern umfasst die zweite lösbare Kupplung vorzugsweise ebenfalls eine erste Kupplungsfläche am Steuerorgan und eine hiermit in Eingriff bringbare zweite Gegenfläche an einem zweiten zentralen Betätigungsorgan, welches in diesem Falle den Spannkörpern zugeordnet ist, so dass durch axiale Verlagerung dieses zweiten zentralen Betätigungsorgans alle Spannkörper gemeinsam verlagert werden, wobei die Kopplung der Spannkörper an das zweite zentrale Betätigungsorgan insbesondere vorzugsweise dergestalt ist, dass die Spannkörper während der Spannbewegung individuell vom zentralen Betätigungsorgan entkoppelt werden, sobald sie am Werkstück anliegen.

Die bestimmungsgemäße Sequenz beim Spannen sieht bei einer solchen Ausgestaltung also vor, dass die Bewegung des Steuerorgans jeweils nur phasenweise mit der Bewegung der Zentrierkörper und/oder der Spannkörper verbunden ist. Hierdurch wird insbesondere ermöglicht, beim Spannen die Bewegung der Zentrierkörper zu beenden, bevor die Bewegung der Spannkörper endet. Im Falle der zweiten Kupplung dient diese insbesondere dem verzögerten Beginn der Bewegung der Spannkörper beim Spannen. Hierauf könnte jedoch bei einer nicht bevorzugten Gestaltung auch verzichtet werden.

Zur Kraftbeaufschlagung der Zentrierkörper weist das Spannmittel vorzugsweise eine erste Federeinrichtung auf, mittels derer die Zentrierkörper zum Zwecke des Spannens radial nach innen und damit in Richtung des Aufnahmebereichs kraftbeaufschlagt werden. Hierdurch wird erreicht, dass die Zentrierkraft, die zum Zentrieren des Werkstücks aufgebracht wird, nicht unmittelbar durch die Verlagerung des Steuerorgans aufgebracht wird, sondern durch die genannte Federeinrichtung, vorzugsweise in Form mehrerer als Schraubenfedern ausgestalteten Druckfedern.

Das Zusammenwirken mit dem zentralen Steuerorgan ist bei einer solchen Gestaltung derart auszugestalten, dass die erste Federeinrichtung mittelbar vom Steuerorgan komprimiert gehalten wird, bis das Steuerorgan in Spannrichtung verlagert wird und dabei eine Entspannung der ersten Federeinrichtung zulässt. Hierdurch kann diese das erste zentrale Betätigungsorgan verschieben, so dass die Zentrierkörper axial und infolgedessen auch radial nach innen verlagert werden. Sobald alle Zentrierkörper am Werkstück anliegen und die Zentrierung somit abgeschlossen ist, kommt das zentrale Betätigungsorgan zum Stillstand und die Wirkkoppelung mit dem Steuerorgan entfällt. Die Zentrierkraft, mittels derer die Zentrierung über die Zentrierkörper erfolgt, ist bei einer solchen Gestaltung mit erster Federeinrichtung immanent durch das Spannmittel und die genannte erste Federeinrichtung definiert, nicht durch eine extern, beispielsweise über das Steuerorgan, eingekoppelte Kraft.

Die Zentrierkörper selbst sind vorzugsweise in einer überlagerten axialen und radialen Richtung verlagerbar. Sie weisen zu diesem Zweck vorzugsweise einen gegenüber der Axialrichtung schräggestellten Führungsbereich auf, der in einem entsprechend ausgerichteten Führungskanal des Gehäuses geführt ist. Somit können durch eine axiale Verlagerung des zentralen Betätigungsorgans direkt die Zentrierkörper verlagert werden, ohne dass es einer weiteren kinematischen Umsetzung bedarf, die die Genauigkeit verringern würde. Zudem ist die überlagerte Bewegung von Vorteil, da hierdurch das Werkstück auch in geringem Maße an eine Anlagefläche des Aufnahmebereichs herangezogen wird, so dass hier eine sehr genaue plane Anlage erzielt wird.

Die Spannkörper sind wie bereits erläutert vorzugsweise individuell beweglich. Dies bedeutet, dass die Bewegung der Spannkörper nicht zwangsweise synchronisiert ist. Nach dem ersten Kontakt der Kontaktfläche eines Spannkörpers mit dem Werkstück, hat dieser Spannkörper seine Endstellung erreicht, während die anderen Spannkörper noch fortgesetzt bewegt werden können, bis auch sie in Kontakt mit dem Werkstück gelangen und mit einer Spannkraft gegen dessen Oberfläche gedrückt werden.

Um die individuelle Beweglichkeit zu erzielen, ist vorzugsweise eine Mehrzahl von zweiten Federeinrichtungen vorgesehen, durch die die Spannkörperjeweils individuell mittelbar oder unmittelbar mit einer Spannkraft in Richtung des Aufnahmebereichs gedrückt werden. Ähnlich der Beschreibung zur ersten Federeinrichtung liegt auch beim Vorsehen der genannten zweiten Federeinrichtungen ein wesentlicher Vorteil darin, dass die Spannkraft nicht durch das Steuerorgan aufgebracht wird, sondern durch die zweiten Federeinrichtungen. Die Spannkraft ist somit durch die bauliche Gestaltung des Spannmittels definiert und es besteht keine Gefahr, durch Verlagerung des Steuerorgans eine zu hohe Spannkraft in das Werkstück einzukoppeln.

Die zweiten Federeinrichtungen könnten direkt auf die Spannkörper wirken. Von Vorteil ist es jedoch, wenn jedem Spannkörper ein Einzelbetätigungsorgan zugeordnet ist, welches mittels der zweiten Federeinrichtung kraftbeaufschlagt wird. Bei einer solchen Gestaltung kann in vorteilhafter Weise zwischen dem Spannkörper und dem zugeordneten Einzelbetätigungsorgan, die in jeweils unterschiedlichen Richtungen beweglich sind, ein Keilgetriebe mit aneinander abgleitenden Keilflächen vorgesehen sein. Dessen Keilflächen sind dabei vorzugsweise derart schräggestellt, dass sich Selbsthemmung einstellen kann, die einer Verlagerung des Einzelbetätigungsorgans durch Kraftbeaufschlagung des Spannkörpers nach außen vom Aufnahmebereich weg entgegenwirkt.

Die Gestaltung mit individuell federkraftbeaufschlagten Einzelbetätigungsorganen und Keilgetriebe führt dazu, dass die zweiten Federeinrichtungen jeweils einen Spannkörper in Richtung des Werkstücks drücken, bis dieser am Werkstück anliegt. In umgekehrter Wirkrichtung kann eine in radialer Richtung vom Werkstück auf den Spannkörper wirkende Kraft, insbesondere durch die spanende Bearbeitung verursacht, den Spannkörper jedoch nicht auslenken, da dies durch die Selbsthemmung verhindert wird. Die Selbsthemmung des Keilgetriebes wird vorzugsweise dadurch erzielt, dass die Keilflächen des Keilgetriebes mit der Axialrichtung einen Winkel <15° einschließen, vorzugsweise <12°.

Anders als die Zentrierkörper erfolgt die Verlagerungsbewegung der Spannkörper vorzugsweise exakt oder im Wesentlichen (+/- 10°) orthogonal zur Axialrichtung, also weitgehend ohne axiale Bewegungskomponente. Anderenfalls bestünde die Gefahr, dass das Werkstück so stark gegen eine Anlagefläche am Gehäuse gedrückt würde, dass sich eine Verformung einstellt, die die Genauigkeit der Bearbeitung beeinträchtigt.

Eine besonders vorteilhafte Gestaltung sieht vor, dass den Spannkörpern ein zweites gemeinsames zentrales Betätigungsorgan zur Kraftbeaufschlagung der Einzelbetätigungsorgane zugeordnet ist. Dieses zweite zentrale Betätigungsorgan wirkt vorzugsweise mit den Einzelbetätigungsorganen dahingehend zusammen, dass deren federbelastete Bewegung zum Zwecke derVerlagerung des Spannkörper auf das Werkstück zu vom zweiten zentralen Betätigungsorgan limitiert ist. Erst wenn dieses verlagert wird, insbesondere durch Verlagerung des Steuerorgans, können auch die Einzelbetätigungsorgane unter derWirkungderzweiten Federeinrichtung verlagert werden, um dadurch die individuelle Verlagerung der Spannkörper an das Werkstück zu gestatten.

Das zweite zentrale Betätigungsorgan dient darüber hinaus auch der gemeinsamen Verlagerung der Spannkörper nach außen. Wenn das zweite zentrale Betätigungsorgan in Richtung der Einzelbetätigungsorgane verlagert wird, gelangen diese in Kontakt mit dem zweiten zentralen Betätigungsorgan und werden von diesen derart verlagert, dass die Spannkörper über eine Führung im Bereich des Keilgetriebes nach außen gedrückt werden.

Die genannte Verlagerung des zweiten Betätigungsorgans zum Zwecke des Lösens der Spannkörper kann grundsätzlich alleine durch eine Verlagerung des Steuerorgans bewirkt werden. Von Vorteil ist jedoch, wenn dem zweiten zentralen Betätigungsorgan eine dritte Federeinrichtung zugeordnet ist, welche zwischen dem Gehäuse und dem zweiten zentralen Betätigungsorgan wirkt und das zweite Betätigungsorgan in Richtung der Einzelbetätigungsorgane drückt. Dabei dient die Federkraft der dritten Federeinrichtung als Lösekraft. Sie ist größer als die Summe der Federkräfte der zweiten Federeinrichtungen, vorzugsweise erheblich größer (mindestens 150% der Summe der Federkräfte der zweiten Federeinrichtungen). Dies bedeutet, dass das Spannmittel immanent und ohne externe Kraftbeaufschlagung über das Steuerorgan in die geöffnete Stellung der Spannkörper zurückkehrt, wenn keine Kraft am Steuerorgan wirkt, welche dies verhindert.

Die Spannkörper werden in Hinblick auf ihre Ausrichtung vorzugsweise spezifisch für einen Werkstücktyp angepasst. Um mittels eines Spannmittels Werkstücke verschiedener Art oder Größe bearbeiten zu können, wird es als besonders vorteilhaft angesehen, wenn das Spannmittel eine separate Wechseleinheit aufweist, die einen Abschnitt des Gehäuses sowie alle Spannkörper umfasst und die stirnseitig vom Spannmittel zum Zwecke des Wechsels angenommen werden kann.

Die Erfindung betrifft darüber hinaus ein Verfahren zum Einspannen von Nocken. Das Verfahren wird vorzugsweise mittels einem Spannmittel der beschriebenen Art durchgeführt.

Das Einspannen findet üblicherweise im Kontext eines Fertigungsschrittes der Nocke statt, im Rahmen dessen nach dem Einspannen eine spanende Bearbeitung an der noch unfertigen Nocke erfolgt. Hierbei kann es sich insbesondere um das Einbringen einer Nockenbohrung zur späteren Anbringung auf dem Nockenrohr oder um die Nachbearbeitung einer schon zuvor eingebrachten Bohrung handeln.

Das erfindungsgemäße Verfahren sieht vor, dass zunächst der Nockenrohling, also die noch unfertige Nocke, in einem Aufnahmebereich eines Spannmittels platziert wird. Dies kann manuell oder mittels eines Zufuhrapparates oder Handhabungsroboters erfolgen. Die Platzierung erfolgt dabei in etwa in der bestimmungsgemäßen Bearbeitungsposition.

Ausgehend von dieser noch groben Platzierung erfolgt mittels eines Satzes von Zentrierkörpern, bestehend aus mehreren radial beweglichen Zentrierkörpern, die Zentrierung des Nockenrohlings, also die präzise Positionierung in der gewünschten Bearbeitungsposition. Die Zentrierkörper werden dabei von außen radial an eine Nockenkontaktfläche der Nocke angelegt, also an die umlaufende Fläche, an der im Betrieb der Nockenwelle das auszulenkende Ventil anliegt.

Nach erfolgter Zentrierung wird ein Satz von Spannkörpern, bestehend aus mehreren aufeinander zu beweglichen Spannkörpern zur Aufbringung eines Haltemoments von außen an die Nockenkontaktfläche der Nocke angelegt.

Die Spannkörper dienen insbesondere der eigentlichen Festlegung der Nocke. Sie werden in Zwischenbereichen zwischen den bereits anliegenden Zentrierkörpern an die Nockenkontaktfläche herangefahren. Damit insbesondere ein Gegenmoment gegen das durch das Bearbeitungswerkzeug erzeugte Moment aufgebracht werden kann, liegen die Spannkörper vorzugsweise zumindest zum Teil an der Nockenaufdickung der Nocke an, wobei sie die Nocke mit einer Spannkraft beaufschlagen, deren Kraftrichtung von der Radialrichtung abweicht.

Beim Anlegen der Spannkörper kommen diese insbesondere vorzugsweise in unterschiedlichem Abstand zum durch die Zentrierung vorgegebenen Mittelpunkt, der mit der Bohrungsachse übereinstimmt, in Anlage an der Nockenkontaktfläche. Die Spannkörper werden vorzugsweise gemeinsam verfahren, sind jedoch in der Lage, ihre jeweilige Bewegung nacheinander in einer jeweils individuellen Spannposition zu beenden, wenn sie jeweils in Kontakt mit der Nockenkontaktfläche gelangt sind. Sie werden vorzugsweise durch Selbsthemmung davon abgehalten, aus ihrer jeweiligen Spannposition nach außen auszuweichen.

Das beschriebene Verfahren hat sich als sehr vorteilhaft für das Einspannen der Nocken herausgestellt. Durch das zweistufige Verfahren mit sequentiellem Anlegen der Zentrierkörper und der Spannkörper an der Nockenkontaktfläche werden sowohl eine optimale Positionierung als auch ein Einspannen erzielt, bei dem die Nocke nicht in einerArt verformt wird, die zu einem inakzeptabel hohem Ausschuss führen würde.

Vorzugsweise ist zur Steuerung des Anlegens der Zentrierkörper und der Spannkörper an die Nockenkontaktfläche der Nocke ein gemeinsames Steuerorgan vorgesehen, welches zum Zwecke des Spannens in einer Spannrichtung verlagert wird und der Steuerung der Zentrierkörper und der Spannkörper dient. Das Verfahren kann somit auf Spanneinrichtungen Verwendung finden, die zur Ansteuerung eines einzigen Steuerorgans ausgebildet sind.

Dabei ist vorzugsweise vorgesehen, dass die Verlagerung des Steuerorgans im Zuge des Spannens zunächst die Verlagerung der Zentrierkörper bewirkt, bis diese an der Nockenkontaktfläche anliegen. Die fortgesetzte Verlagerung des Steuerorgans bewirkt anschließend keine weitere Verlagerung der Zentrierkörper. Die Verlagerung der Spannkörper beginnt vorzugsweise nach dem Beginn der Verlagerung der Zentrierkörper und endet für den ersten der Spannkörper erst, wenn dieser an der Nockenkontaktfläche anliegt.

Das beim Verfahren verwendete Steuerorgan verfügt vorzugsweise zum Zwecke des Spannens über eine erste Kopplungsfläche zur Steuerung der Zentrierkörper. Während der Verlagerung des Steuerorgans liegt diese erste Kopplungsfläche an einer ersten Gegenfläche eines erstes zentrales Betätigungsorgans zur Betätigung der Zentrierkörper an, welches gleichzeitig durch eine erste Federeinrichtung gegen die erste Kupplungsfläche des Steuerorgans gedrückt wird, wodurch die Zentrierkörper radial nach innen in Richtung des Aufnahmebereichs gedrückt werden. Sobald alle Zentrierkörper an der Nocke anliegen endet die Verlagerung des ersten zentralen Betätigungsorgans und die erste Gegenfläche löst sich von der ersten Kopplungsfläche des weiterbewegten Steuerorgans, welches anschließend noch die Spannkörper bis in die jeweilige Spannposition verfährt.

Das beim Verfahren verwendete Steuerorgan verfügt weiterhin vorzugsweise zum Zwecke des Spannens über eine zweite Kopplungsfläche zur Steuerung der Spannkörper. Während der Verlagerung des Steuerorgans gelangt die zweite Kopplungsfläche in Anlage an einer zweiten Gegenfläche eines zweiten zentralen Betätigungsorgans zur Betätigung der Spannkörper, so dass das zweite zentrale Betätigungsorgan bei fortgesetzter Bewegung des Steuerorgans mit diesem gemeinsam verlagert wird. Dabei können in Folge der Verlagerung des zweiten zentralen Betätigungsorgans am zentralen Betätigungsorgan anliegende Einzelbetätigungsorgane unter der Wirkung von zweiten Federeinrichtungen individuell verlagert werden, wobei dies eine individuelle Verlagerung der Spannkörper nach innen verursacht, bis diese jeweils an der Nocke anliegen, so dass sich dann das jeweilige Einzelbetätigungsorgan vom zentralen Betätigungsorgan löst. Sobald sich das letzte Einzelbetätigungsorgan vom zweiten zentralen Betätigungsorgans gelöst hat, ist der Spannvorgang abgeschlossen.

### KURZBESCHREIBUNG DER ZEICHNUNGEN

Weitere Vorteile und Aspekte der Erfindung ergeben sich aus den Ansprüchen und aus der nachfolgenden Beschreibung eines bevorzugten Ausführungsbeispiels der Erfindung, das nachfolgend anhand der Figuren erläutertwird.
Fig. 1 zeigt ein erfindungsgemäßes Spannmittel in perspektivischer Darstellung mit bereits eingespannter Nocke.
Fig. 2 zeigt die Stirnseite des Spannmittels der Fig.1.
Fig. 3 zeigt eine Teilkomponente des Spannmittels, eines der Einzelbetätigungsorgane für einen Spannkörper, zusammen mit dem betreffenden Spannkörper
Fig. 4 bis 7 zeigen das Spannmittel in fünf Verfahrensstadien beim Einspannen der Nocke.
Fig. 8 zeigt eine Variante des Spannmittels mit einer Wechseleinheit zur Anpassung an unterschiedliche Werkstücke.
Fig. 9 zeigt in Form eines Ausschnittes eine Variation in Hinblick auf die Ausgestaltung der Spannkörper des Spannmittels.

### DETAILLIERTE BESCHREIBUNG DERAUSFÜHRUNGSBEISPIELE

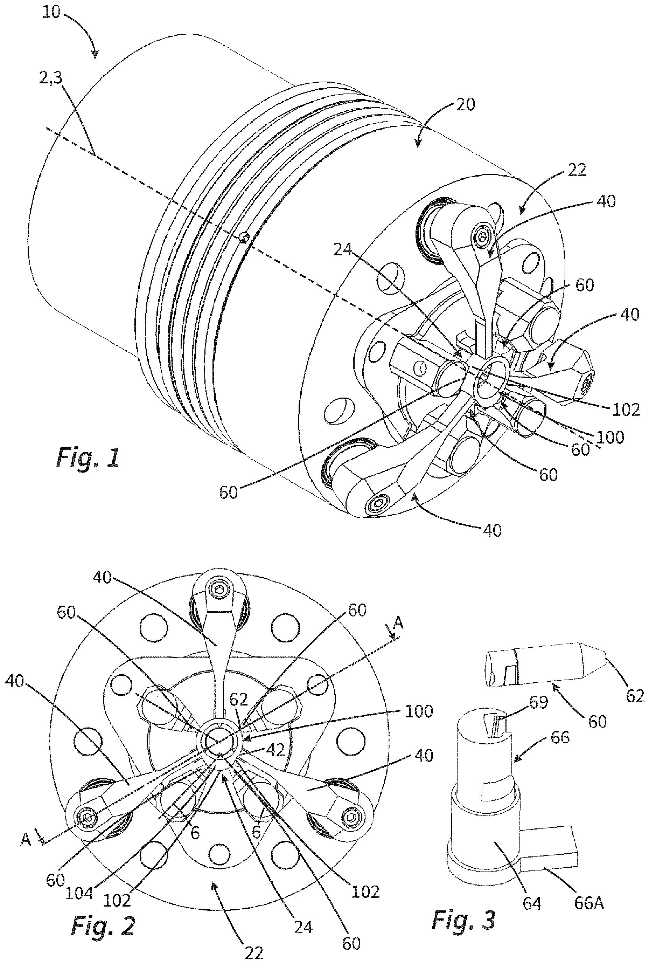

Fig. 1 und 2 zeigen ein erfindungsgemäßes Spannmittel 10 in einer perspektivischen Ansicht sowie in einer stirnseitigen Ansicht.

Das Spannmittel 10 ist dafür vorgesehen, einen Nockenrohling 100 zu bearbeiten. Dieser ist zu diesem Zweck in einem Aufnahmebereich 24 an der Stirnseite 22 aufgenommen. Vorzugsweise erfolgt die Bearbeitung des Werkstücks bei rotierendem Spannmittel 10. Ein Gehäuse 20 des Spannmittels 10 ist daher im Wesentlichen rotationssymmetrisch zu einer in Axialrichtung 2 erstreckten Mittelachse 3 ausgebildet. Im Falle eines nichtrotierenden Spannmittels sind die Axialrichtung 2 und die Mittelachse durch den Schnittpunkt der Beweglichkeit der im Weiteren noch erläuterten Zentrierkörper 40 definiert.

Wie sich den Figuren 1 und 2 entnehmen lässt, sind zwei Arten von Backenkörpern vorgesehen, die im gespannten Zustand des Spannmittels 10 mit eingelegtem Nockenrohling 100 an diesem anliegen.

Den ersten Typ von Backenkörpern stellen die Zentrierkörper 40 dar. Es handelt sich um überlagert axial/radial verlagerbare Körper, die durch außenliegende stirnseitige Durchbrechungen des Gehäuses 20 geführt sind und die über nach innen liegende Ausleger verfügen, an deren innenseitigem Ende jeweils eine Kontaktfläche 42 vorgesehen ist.

Die drei Zentrierkörper sind gegeneinander um jeweils 120° versetzt angeordnet und in der zur Axialrichtung 2 orthogonalen Ebene rein radial verlagerbar, also ohne tangentiale Richtungskomponente. Wie den Fig. 1 und 2 zu entnehmen ist, greifen die drei Zentrierkörper derart an der Nocke 100 an, dass die Nockenaufdickung zwischen zwei derZentrierkörper positioniert ist. Da je nach Formgebung des Werkstücks die Nockenaufdickung oder andere Erhebungen an der Außenseite sich über 120° oder mehr erstrecken kann, kann es geboten sein, dass die Kontaktflächen 42 nicht vollständig identisch ausgebildet sind, sondern in Abhängigkeit des zu spannenden Werkstücks etwas variierende Formgebungen aufweisen.

Zwischen den Zentrierkörpern 40 sind als zweiter Typ von Backenkörpern Spannkörper 60 vorgesehen, die wie auch die Zentrierkörper 40 Kontaktflächen 62 aufweisen, mit denen sie an der Nockenkontaktfläche 102 der Nocke anliegen. Diese Spannkörper 60 dienen der eigentlichen Festlegung der Nocke 100. Wie anhand von Fig. 2 ersichtlich ist, sind sie nicht gleichmäßig verteilt und ausgerichtet wie die Zentrierkörper 40, sondern an die Formgebung des Werkstücks 100, vorliegend der Nocke 100, angepasst. So liegen zwei der Spannkörper in etwa senkrecht an der Nockenaufdickung 104 der Nocken 100 an und sind beide in einer gemeinsamen Lücke zwischen zweien der Zentrierkörper 40 angeordnet. Die Verlagerungsrichtungen der Spannkörper 60 schneiden sich nicht in einem gemeinsamen Schnittpunkt, wie die Bewegungsrichtungen 6 in Fig. 2 verdeutlichen.

Das Spannmittel der Fig. 1 und 2 erlaubt in besonders vorteilhafter Weise das Spannen von Werkstücken und insbesondere Nocken. Hierbei erfolgt zunächst eine Zentrierung über die Zentrierkörper 40, wobei die Nocke 100 einerseits an die Anlagefläche des Aufnahmebereichs 24 angezogen und andererseits in die richtige Bearbeitungsposition gedrückt wird. Anschließend erfolgt das eigentliche Spannen über die Spannkörper 60, die derart ausgerichtet und kraftbeaufschlagt sind, dass sie bei vernachlässigbarer Verformung der Nocke 100 in idealer Weise Bearbeitungskräfte aufnehmen können.

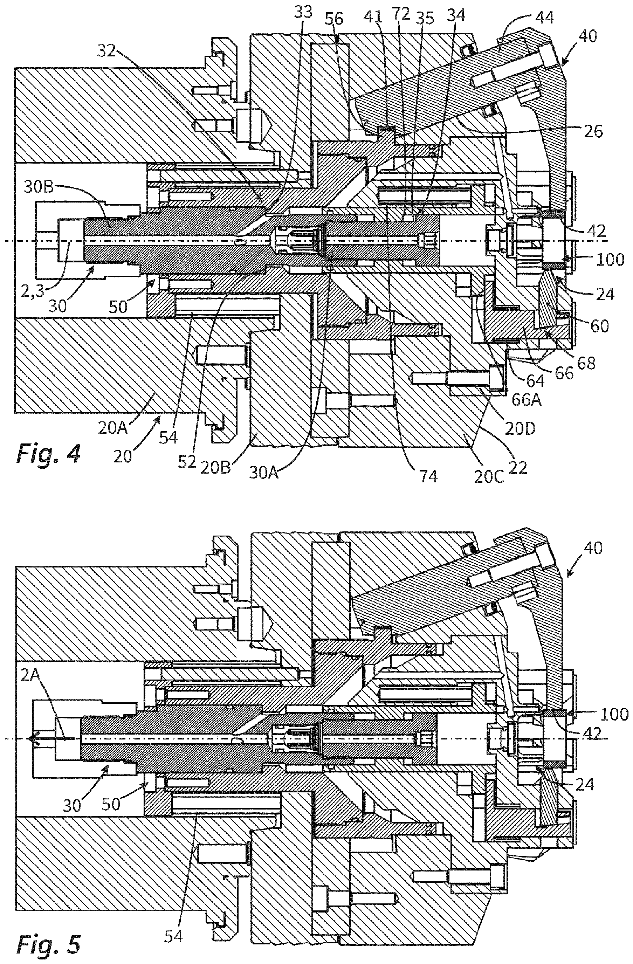

Der Vorgang des Spannens wird nachfolgend anhand der Fig. 4 bis 7 verdeutlich. Diese Figuren stellen Schnitte durch das Spannmittel 10 dar. Die Schnittebene ist in Fig. 2 durch die Linie A verdeutlicht.

Verschiedene Komponenten des Spannmittels werden im Zuge des Spannens in Axialrichtung 2 verlagert. Dabei wird im Weiteren eine Bewegung in Richtung der Spanneinrichtung und in Fig. 4 bis 7 nach links als Bewegung in Proximalrichtung und die entgegengesetzte Bewegung nach rechts als Bewegung in Distalrichtung bezeichnet.

Fig. 4 zeigt das Spannmittel 10 im gelösten Zustand. Das Gehäuse 20 des Spannmittels 10 weist als Hauptkomponenten die Gehäuseteile 20A, 20B, 20C, 20D auf, die im Betrieb des Spannmittels 10 zueinander ortsfest verbleiben. Mit seinem in Fig. 4 linksseitigen Ende wird das Spannmittel bestimmungsgemäß an einer Spanneinrichtung befestigt, mittels derer einerseits das Spannmittel 10 um die Mittelachse 3 rotierend angetrieben kann und andererseits eine axiale Verlagerung eines im weiteren erläuterten Steuerorgans 30 bewirkt werden kann.

Zur Steuerung des Spannvorgangs ist zentrisch im Gehäuse 20 das genannte Steuerorgan 30 aus zwei fest miteinander verbundenen Segmenten 30A, 30B vorgesehen, welches in nicht näher dargestellter Weise an ein Steuerorgan der genannten Spanneinrichtung gekoppelt wird, um hierdurch axial verlagert zu werden.

Zur Zusammenwirkung mit dem Steuerorgan 30 ist ein erstes zentrales Betätigungsorgan 50 vorgesehen, welches axial beweglich ist und welches mittels eines Mitnehmersteges 56 des Betätigungsorgans 50 und mittels Mitnehmernuten 41 der Zentrierkörper 40 an die Zentrierkörper 40 gekoppelt ist. Da die Zentrierkörper 40 mittels zylindrischer Führungsabschnitte 44 in schräg ausgerichteten Führungskanälen 26 des Gehäuses 20 geführt sind, bewirkt eine Verlagerung des zentralen Betätigungsorgans 50 eine synchronisierte überlagerte radiale und axiale Bewegung aller Zentrierkörper. Durch eine erste Federeinrichtung 54 in Form von Schraubendruckfedern wird das erste zentrale Betätigungsorgan permanent in proximaler Richtung gegenüber dem Gehäuse 20 kraftbeaufschlagt. Sofern nicht durch das Steuerorgan 30 eine größere entgegengesetzte Kraft in das erste zentrale Betätigungsorgan 50 eingekoppelt wird, bewirkt die erste Federeinrichtung 54 eine Kraftbeaufschlagung der Zentrierkörper radial in Richtung des Aufnahmebereichs 24 sowie in proximale Richtung.

Zum phasenweisen Koppeln des ersten zentralen Betätigungsorgans 50 mit dem Steuerorgan 30 ist am Steuerorgan eine umlaufende nach außen erstreckte Kopplungsfläche 33 vorgesehen. Korrespondierend hierzu ist am zentralen Betätigungsorgan 50 im Bereich einer innenseitigen Stufe eine Gegenfläche 52 vorgesehen. Durch deren Eingriff miteinander nimmt das Steuerorgan 30 bei Verlagerung in distale Richtung bei gleichzeitiger Komprimierung der ersten Federeinrichtung 54 das Betätigungsorgan 50 mit, wobei hierdurch auch die Zentrierkörper 40 axial in distale Richtung sowie radial nach außen verlagert werden.

Zur Zusammenwirkung mit dem Steuerorgan 30 ist weiterhin ein zweites zentrales Betätigungsorgan 70 vorgesehen, welches ebenfalls axial beweglich ist. Dieses zweite zentrale Betätigungsorgan 70 ist zur Steuerung der Spannkörper 60 vorgesehen. Zu diesem Zweck ist jedem Spannkörper 60 ein axial bewegliches Einzelbetätigungsorgan 66 zugeordnet, welches in Richtung des zweiten zentralen Betätigungsorgans 70 eine Druckfläche 66A aufweist und welches durch ein Keilgetriebe 68 auf das rückwärtige Ende des Spannkörpers 60 wirkt. Ein solcher Spannkörper 60 mit Einzelbetätigungsorgan 66 ist zum besseren Verständnis in Fig. 3 im zerlegten Zustand dargestellt. Dabei ist auch zu erkennen, dass das Einzelbetätigungsorgan 66 zusätzlich eine T-förmige Führung 69 aufweist, damit durch bidirektionale axiale Verlagerung des Einzelbetätigungsorgans 66 der Spannkörper 60 ebenfalls bidirektional verlagerbar ist.

Jedem Einzelbetätigungsorgan 66 ist eine zweite Federeinrichtung 64 zugeordnet, mittels derer das jeweilige Betätigungsorgan permanent in proximale Richtung kraftbeaufschlagt ist. Das Keilgetriebe 68 bewirkt dabei, dass die zweite Federeinrichtung 64 mittelbar eine Kraftbeaufschlagung des Spannkörpers 60 in Richtung des Aufnahmebereichs 24 verursachen kann.

Durch eine dritte Federeinrichtung 74 in Form von Schraubendruckfedern wird jedoch das zweite zentrale Betätigungsorgan permanent in distale Richtung kraftbeaufschlagt, wobei die Kraft der Federeinrichtung 74 die Gesamtkraft aller Federeinrichtungen 64 übersteigt. Sofern das Steuerorgan 30 keine Kraft auf das zweite zentrale Betätigungsorgan 70 ausübt, drückt die dritte Federeinrichtung 74 demnach das zweite zentrale Betätigungsorgan 70 in distale Richtung und drückt dabei gegen die Federkraft der zweiten Federeinrichtungen 74 auch die Einzelbetätigungsorgane 66 in distale Richtung. Aufgrund der Führungen 69 wiederum bewirkt dies eine Verlagerung der Spannkörper 60 nach außen.

Zum phasenweisen Koppeln des zweiten zentralen Betätigungsorgans 70 mit dem Steuerorgan 30 ist am Steuerorgan 30 endseitig eine nach außen erstreckte Kopplungsfläche 35 vorgesehen. Korrespondierend hierzu ist am zweiten zentralen Betätigungsorgan 70 im Bereich einer innenseitigen Stufe eine Gegenfläche 72 vorgesehen. Hierdurch nimmt das Steuerorgan 30 bei Verlagerung in proximale Richtung und gegen die Kraft der dritten Federeinrichtung 74 das zweite zentrale Betätigungsorgan 70 mit, wodurch die Einzelbetätigungsorgane 66 unter dem Eindruck der Federkraft der zweiten Federeinrichtungen 64 in proximaler Richtung folgen können und die Spannkörper 60 nach innen verlagert werden können.

Der Ablauf des Spannens gestaltet sich ausgehend von Fig. 4 wie folgt:
Fig. 4 zeigt den Ausgangszustand, in dem sich das Steuerorgan 30 in seiner distalen Endlage befindet. Bedingt durch diese Position wird das erste zentrale Betätigungsorgan 50 gegen die Kraft der Federeinrichtung 54 ebenfalls in seine distale Endlage gedrückt. Dies wiederum bewirkt, dass die Zentrierkörper 40 sich in ihrer außenliegenden Endlage befinden. Ein Zusammenwirken zwischen dem Steuerorgan und dem zweiten zentralen Betätigungsorgan liegt in diesem Zustand noch nicht vor. Die entsprechenden Flächen 35, 72 sind voneinander beabstandet. Das zweite zentrale Betätigungsorgan 70 wird daher gemeinsam mit den Einzelbetätigungsorganen 66 von der dritten Federeinrichtung 74 und gegen die Kraft der zweiten Federeinrichtungen 64 in seine distale Endlage gedrückt, so dass auch die Spannkörpersich in ihrer äußeren Endlage befinden.

In diesem Zustand wird der Nockenrohling 100 im Aufnahmebereich 24 platziert, um dort anschließend zentriert und festgespannt zu werden.

Der Spannvorgang beginnt, indem über die Spanneinrichtung das Steuerorgan 30 in proximale Richtung verlagert wird.

Dies bewirkt zunächst, dass unter der Wirkung der ersten Federeinrichtung 54 auch das erste zentrale Betätigungsorgan 50 in proximale Richtung verlagert wird, nämlich in dem Maße, in dem es die Verlagerung des Steuerorgans 30 gestattet. Mit dem ersten zentralen Betätigungsorgan werden auch die Zentrierkörper axial in proximale Richtung und radial auf den Nockenrohling 100 zu bewegt. Die Bewegung erfolgt dabei für alle Zentrierkörper 40 in gleichem Maße.

Durch Bewegung der Zentrierkörper 40 gelangen alle Zentrierkörper in Anlage mit der Nockenkontaktfläche 102 des Nockenrohlings 100 und drücken diese dabei unter nur geringer Krafteinwirkung der ersten Federeinrichtung 54 in die Sollposition für die Bearbeitung. Durch die axiale Bewegungskomponente wird der Nockenrohling 100 gleichzeitig auch gegen eine gehäuseseitige Auflagefläche des Aufnahmebereichs 24 gedrückt, so dass er plan hieran anliegt.

Fig. 5 zeigt den hierdurch erreichten Zustand.

Ausgehend hiervon führt eine fortgesetzte Verlagerung des Steuerorgans 30 in proximale Richtung nicht mehrzu einer Verlagerung des ersten zentralen Betätigungsorgans 50, da eine fortgesetzte axiale Verlagerung der Zentrierkörper 40 aufgrund des Anliegens am Nockenrohling 100 nicht mehr möglich ist. Die Kopplungsfläche 33 und die Gegenfläche 52 lösen sich daher voneinander.

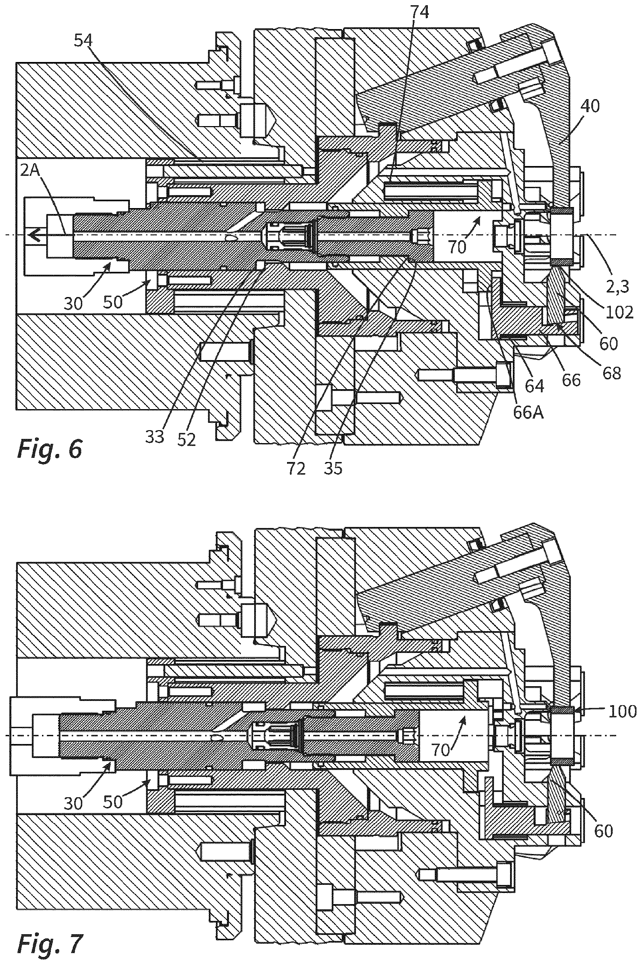

Bei Erreichen des Zustandes der Fig. 6 gelangt das Steuerorgan 30 über die Kopplungsfläche 35 in Anlage mit der Gegenfläche 72 des zweiten zentralen Betätigungsorgans 70, so dass ab diesem Zustand die fortgesetzte Bewegung des Steuerorgans 30 in proximale Richtung ein Mitnehmen des zweiten zentralen Betätigungsorgans 70 gegen die Kraft der dritten Federeinrichtung 74 bewirkt.

Die Verlagerung des zweiten zentralen Betätigungsorgans 70 erlaubt es auch den Einzelbetätigungsorganen 66 in proximaler Richtungzu folgen, wobei diese Bewegung durch die Federkraft derzweiten Federeinrichtung 64 bewirkt wird. Über die Keilgetriebe 68 drücken die Einzelbetätigungsorgane 66 die Spannkörper 60 in Richtung der Nockenkontaktfläche 102 des Nockenrohlings 100.

Die Verlagerung der im Ausführungsbeispiel vier Einzelbetätigungsorgane 66 endet nicht gleichzeitig, sondern jeweils dann, wenn der jeweilige Spannkörper 60 mit seiner Kontaktfläche 62 in Anlage an die Nockenkontaktfläche 102 kommt. Dann jeweils löst sich die Druckfläche 66A vom zweiten zentralen Betätigungsorgan 70. Eine ungewünschte Verlagerung des Nockenrohlings 100 durch die Spannkörper 60 ist nicht zu befürchten, da die durch die erste Federeinrichtung 54 und die Zentrierkörper 40 bewirkte Haltekraft ausreichend groß ist, um dies zu verhindern.

Fig. 7 zeigt den Zustand, der erreicht ist, wenn der letzte der vier Spannkörper 60 am Nockenrohling 100 anliegt. Eine fortgesetzte Verlagerung des Steuerorgans 30 hat nun keinen Einfluss mehr auf den Spannzustand des Spannmittels 10.

Der Nockenrohling 100 ist mit Erreichen des Zustandes der Fig. 7 gespannt und kann nachfolgend spanend bearbeitet werden, beispielsweise durch eine Bohrung zum Zwecke der Vergrößerung der schon zuvor eingebrachten Nockenbohrung oder zum Zwecke der Einbringung einer Fase. Die durch die Keilgetriebe 68 bewirkte Selbsthemmung verhindert, dass die durch die Spannkörper 60 eingebrachte Spannung dabei durch Auslenkung der Spannkörper 60 nach außen überwunden werden kann.

Nach Bearbeitung erfolgt das Lösen mit dem oben beschriebenen Ablauf in umgekehrter Richtung. Durch Verlagerung des Steuerorgans 30 in distale Richtung werden zunächst die Spannkörper 60 unter der Wirkung der Federkraft der dritten Federeinrichtung 74 nach außen gedrückt, bis das zweite zentrale Betätigungsorgan 70 seine distale Endlage erreicht und die durch die Flächen 35, 72 bewirkte Kopplung endet. Bei fortgesetzter Bewegung des Steuerorgans 30 in distale Richtung koppelt das Steuerorgan 30 an das erste zentrale Betätigungsorgan 50 über die Flächen 33, 52 an, so dass nachfolgend gegen die Kraft der ersten Federeinrichtung 54 das erste zentrale Betätigungsorgan 50 mitgenommen wird und damit auch die Zentrierkörper 40 axial in distale Richtung und radial nach außen verlagert werden. Die Nocke 100 ist damit von Spannmittel 10 gelöst.

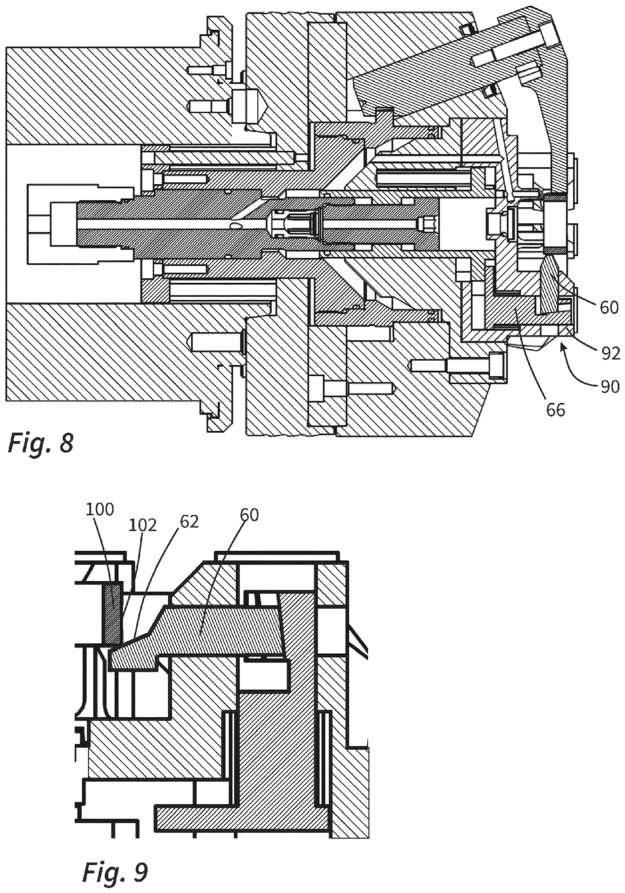

Fig. 8 zeigt eine besondere Variante des Spannmittels 10. Dieses unterscheidet sich von der vorbeschriebenen durch eine Wechseleinheit 90, die einen Teil der Stirnfläche des Gehäuses 20 mitsamt einer Mehrzahl von Domen 92 umfasst, innerhalb derer die Einzelbetätigungsorgane 66 und die Spannkörper 60 montiert sind.

Die Wechseleinheit ist in Hinblick auf die Zahl, Art und Ausrichtung der Spannkörper 60 an einen bestimmten Typ von Werkstück 100 angepasst. Soll ein anderes Werkstück bearbeitet werden, kann das Spannmittel durch Austausch der Wechseleinheit und ggf. auch partiellen Austausch der Zentrierkörper hierfür umgerüstet werden.

Fig. 9 zeigt in vergrößerter Darstellung eine besondere Form eines Spannkörpers 60. Dieser unterschiedet sich von den vorgeschriebenen Spannkörpern dadurch, dass seine Kontaktfläche 62 nicht ausschließlich auf die Nockenkontaktfläche 102 wirkt, sondern deren Rand untergreift. Die Kontaktfläche 62 ist hierfür schräggestellt. Dieses Untergreifen gestattet es, die gegenüberliegende Seite spannend zu bearbeiten, ohne dass die Parallelität der Stirnseiten der Nocke 100 aufgrund eine Biegeverformung leidet.

Ein Spannkörper 60 entsprechend der Fig. 9 wird vorzugsweise als ergänzender Spannkörper vorgesehen, bezugnehmend auf Fig. 2 also als fünfter Spannkörper. Er ist vorteilhafterweise im Bereich der Nockenaufdickung 104 angeordnet. Alternativ könnte jedoch auch einer der beiden Spannkörper 60, die in Fig. 2 im Bereich der Nockenaufdickung 104 vorgesehen sind, in Art des Spannkörpers der Fig. 9 ausgestaltet sein.

## Patentansprüche

1. Spannmittel (10) in Art eines Außenspannmittels zum Festlegen von Werkstücken zum Zwecke der spannenden Bearbeitung, insbesondere zum Festlegen von Nockenrohlingen (100) für gefügte Nockenwellen zum Zwecke der Einbringung oder Nachbearbeitung einer Nockenbohrung, mit den folgenden Merkmalen:
a. das Spannmittel (10) weist ein Gehäuse (20) und einen an einer Stirnseite (22) des Gehäuses (20) vorgesehenen Aufnahmebereich (24) zur Aufnahme eines Werkstücks (100) auf, und
b. das Spannmittel (10) weist eine Mehrzahl von radial in Richtung des Aufnahmebereichs beweglichen Zentrierkörpern (40) zur Zentrierung des Werkstücks (100) auf, und
c. das Spannmittel (10) weist eine Mehrzahl von in Richtung des Aufnahmebereichs beweglichen Spannkörpern (60) zur Aufbringung eines Haltemoments auf das Werkstück (100) auf, und
d. das Spannmittel (10) weist ein gemeinsames in einer Axialrichtung (2) verlagerbares Steuerorgan (30) auf, welches mit den Zentrierkörpern (40) und den Spannkörpern (60) derart gekoppelt ist, dass bei einer Bewegung des Steuerorgans (30) in einer Spannrichtung (2A) die Zentrierkörpern (40) und die Spannkörper (60) zeitlich versetzt zueinander nach innen in Richtung des Aufnahmebereichs (24) verlagert werden.

2. Spannmittel (10) nach Anspruch 1 mit dem folgenden zusätzlichen Merkmal:
a. das Spannmittel (10) weist zwei lösbare Kupplungen (32, 34) zur zumindest phasenweisen Kopplung des Steuerorgans (30) mit den Zentrierkörpern (40) einerseits und der Spannkörper (60) andererseits auf, und
b. die erste lösbare Kupplung (32) umfasst eine erste Kupplungsfläche (33) am Steuerorgan (30) und eine hiermit in Eingriff bringbare erste Gegenfläche (52) an einem ersten zentralen Betätigungsorgan (50) auf, welches den Zentrierkörpern (40) zugeordnet ist, und
c. die zweite lösbare Kupplung (34) umfasst eine erste Kupplungsfläche (35) am Steuerorgan (30) und eine hiermit in Eingriff bringbare zweite Gegenfläche (72) an einem zweiten zentralen Betätigungsorgan (70) auf, welches den Spannkörpern (60) zugeordnet ist.

3. Spannmittel (10) nach Anspruch 1 oder 2 mit dem folgenden zusätzlichen Merkmal:
a. die Zentrierkörper (40) weisen ein axial bewegliches gemeinsames zentrales Betätigungsorgan (50) auf, mittels dessen sie synchronisiert verlagerbar sind.

4. Spannmittel (10) nach einem der vorstehenden Ansprüche mit dem folgenden zusätzlichen Merkmal:
a. das Spannmittel (10) weist eine erste Federeinrichtung (54) auf, mittels derer die Zentrierkörper (40) radial nach innen kraftbeaufschlagt werden,
insbesondere mit dem zusätzlichen Merkmal:
b. die erste Federeinrichtung (54) wirkt zwischen dem Gehäuse (20) und dem ersten zentralen Betätigungsorgan (50).

5. Spannmittel (10) nach einem der vorstehenden Ansprüche mit dem folgenden zusätzlichen Merkmal:
a. die Zentrierkörper (40) sind gegenüber dem Gehäuse (20) in einer überlagerten axialen und radialen Richtungverlagerbar.

6. Spannmittel (10) nach einem der vorstehenden Ansprüche mit dem folgenden zusätzlichen Merkmal:
a. den Spannkörpern (60) ist jeweils eine zweite Federeinrichtungen (64) zugeordnet, mittels derer sie individuell nach innen in Richtung des Aufnahmebereichs kraftbeaufschlagt werden.

7. Spannmittel (10) nach einem der vorstehenden Ansprüche mit dem folgenden zusätzlichen Merkmal:
a. jedem Spannkörper (60) ist ein Einzelbetätigungsorgan (66) zugeordnet, welches mittels der zweiten Federeinrichtung (64) kraftbeaufschlagt wird, und
b. zwischen dem Spannkörper (60) und dem Einzelbetätigungsorgan (66) ist ein Keilgetriebe (68) mit aneinander abgleitenden Keilflächen vorgesehen, wobei die Keilflächen derart schräggestellt sind, dass einer Verlagerung des Einzelbetätigungsorgan (66) durch Kraftbeaufschlagung des Spannkörpers (60) nach außen vom Aufnahmebereich weg Selbsthemmung entgegenwirkt.

8. Spannmittel (10) nach Anspruch 7 mit dem folgenden zusätzlichen Merkmal:
a. den Spannkörpern (60) ist ein zweites gemeinsames zentrales Betätigungsorgan (70) zur Kraftbeaufschlagung der Einzelbetätigungsorgane (66) zugeordnet, und
b. dem zweiten zentralen Betätigungsorgan (70) ist eine dritte Federeinrichtung (74) zugeordnet, welche zwischen dem Gehäuse (20) und dem zweiten zentralen Betätigungsorgan (70) wirkt.

9. Spannmittel (10) nach einem der vorstehenden Ansprüche mit dem folgenden zusätzlichen Merkmal:
a. die Zahl der in unterschiedlicher Richtung in Richtung des Aufnahmebereichs beweglichen Spannkörper (60) beträgt mindestens drei, insbesondere vorzugsweise mindestens vier, und/oder
vorzugsweise mit dem zusätzlichen Merkmal:
b. die Spannkörper (60) weisen eine dahingehend unregelmäßige Anordnung auf, dass die Bewegungsrichtung in Richtung des Aufnahmebereichs mindestens eines der Spannkörper (60) zu den Bewegungsrichtungen beider benachbarter Spannkörper (60) unterschiedliche Winkel einschließt und/oder sich nicht mit den Bewegungsrichtungen beider benachbarter Spannkörper (60) in einem gemeinsamen Punkt schneidet.

10. Spannmittel (10) nach einem der vorstehenden Ansprüche mit mindestens einem der folgenden zusätzlichen Merkmale:
a. die Zahl der in unterschiedlicher Richtung radial beweglichen Zentrierkörper (40) beträgt mindestens drei, insbesondere vorzugsweise genau drei, und/oder
b. die Zentrierkörper (40) sind mit Kontaktflächen (42) zur Anlage am Werkstück versehen, wobei die Kontaktflächen (42) mindestens zweier Zentrierkörper (40) eine voneinander abweichende Formgebung aufweisen, und/oder
c. die Spannkörpern (60) und den jeweiligen Einzelbetätigungsorganen (66) ist eine Führung (69) zugeordnet, mittels derer eine Verlagerung der Einzelbetätigungsorgane (66) in einer Freigaberichtung (2B) zu einer Verlagerung der Spannkörper (60) nach außen bewirkt wird, und/oder
d. die Spannkörper (60) sind relativ zum Gehäuse (20) in einer Bewegungsrichtung beweglich, die mit der Axialrichtung einen Winkel von 90° (+/-10°) einschließt, und/oder
e. das Gehäuse (20) weist zum Zwecke des rotierenden Betriebs eine im Wesentlichen zur Axialrichtung rotationssymmetrische Formgebung auf, und/oder
f. mindestens ein Spannkörper (60) weist eine Kontaktfläche (62) auf, die zum Untergreifen des Werkstücks (100) schräggestellt ist, und/oder
g. das Spannmittel (10) weist eine separate Wechseleinheit (90) auf, die einen Abschnitt des Gehäuses (20) sowie alle Spannkörper (60) umfasst und die stirnseitig vom Spannmittel (10) zum Zwecke des Wechsels angenommen werden kann.

11. Verfahren zum Einspannen eines Nockenrohlings (100) zum Zwecke der spanenden Bearbeitung mit den folgenden Merkmalen:
a. der Nockenrohling (100) wird in einem Aufnahmebereich (24) eines Spannmittels (10) platziert, und
b. mittels eines ersten Satzes von Zentrierkörpern (40) erfolgt eine Zentrierung des Nockenrohlings (100), wobei die Zentrierkörper (40) von außen radial an eine Nockenkontaktfläche (102) der Nocke (100) angelegt werden, und
c. nach erfolgter Zentrierung wird ein zweiter Satz von Spannkörpern (60) zur Aufbringung eines Haltemoments von außen an die Nockenkontaktfläche (102) der Nocke (100) angelegt.

12. Verfahren nach Anspruch 11 mit dem folgenden zusätzlichen Merkmal:
a. zur Steuerung des Anlegens der Zentrierkörper (40) und der Spannkörper (60) an die Nockenkontaktfläche (102) der Nocke (100) ist ein gemeinsames Steuerorgan (30) vorgesehen, welches zum Zwecke des Spannens in einer Spannrichtung (2A) verlagert wird und der Steuerung der Zentrierkörper (40) und der Spannkörper (60) dient.

13. Verfahren nach Anspruch 11 oder 12 mit den folgenden zusätzlichen Merkmalen:
a. zur Steuerung des Anlegens der Zentrierkörper (40) und der Spannkörper (60) an die Nockenkontaktfläche (102) der Nocke (100) ist ein gemeinsames Steuerorgan (30) vorgesehen, welches zum Zwecke des Spannens in einer Spannrichtung (2A) verlagert wird und über eine erste Kopplungsfläche (33) zur Steuerung der Zentrierkörper (40) verfügt, und
b. während der Verlagerung des Steuerorgans (30) liegt die erste Kopplungsfläche (33) an einer ersten Gegenfläche (52) eines erstes zentrales Betätigungsorgan (50) zur Betätigung der Zentrierkörper (40) an, welches dabei durch eine erste Federeinrichtung (54) gegen die erste Kupplungsfläche (33) des Steuerorgans (30) gedrückt wird, wodurch die Zentrierkörper (40) radial nach innen in Richtung des Aufnahmebereichs (24) gedrückt werden, und
c. sobald alle Zentrierkörper (40) an der Nocke (100) anliegen endet die Verlagerung des ersten zentralen Betätigungsorgans (50) und die erste Gegenfläche (52) löst sich von der ersten Kopplungsfläche des weiterbewegten Steuerorgans (30).

14. Verfahren nach einem der Ansprüche 11 oder 13 mit den folgenden zusätzlichen Merkmalen:
a. zur Steuerung des Anlegens der Zentrierkörper (40) und der Spannkörper (60) an die Nockenkontaktfläche (102) der Nocke (100) ist ein gemeinsames Steuerorgan (30) vorgesehen, welches zum Zwecke des Spannens in einer Spannrichtung (2A) verlagert wird und über eine zweite Kopplungsfläche (35) zur Steuerung der Spannkörper (60) verfügt, und
b. während der Verlagerung des Steuerorgans (30) gelangt die zweite Kopplungsfläche (35) in Anlage an einer zweiten Gegenfläche (72) eines zweiten zentrales Betätigungsorgan (70) zur Betätigung der Spannkörper (60), so dass das zweite zentrale Betätigungsorgan (70) bei fortgesetzter Bewegung des Steuerorgans (30) mit diesem gemeinsam verlagert wird, und
c. in Folge der Verlagerung des zweiten zentralen Betätigungsorgans (70) können am zentralen Betätigungsorgan (70) anliegende Einzelbetätigungsorgane (66) unter der Wirkung von zweiten Federeinrichtungen (64) individuell verlagert werden, wobei dies eine individuelle Verlagerung der Spannkörper (60) nach innen verursacht, bis diese jeweils an der Nocke (100) anliegen, so dass sich dann das jeweilige Einzelbetätigungsorgan (66) vom zentralen Betätigungsorgan (70) löst.

15. Verfahren nach einem der Ansprüche 11 bis 14 mit dem folgenden zusätzlichen Merkmal:
a. während der Verlagerung des Steuerorgans (30) zwischen einer Freigabe-Endstellung und einer Spann-Endstellung löst sich die erste Gegenfläche (52) von der ersten Kopplungsfläche (33), bevor der erste Spannkörper (60) in Kontakt mit der Nocke (100) gelangt.
